# EUROPEAN PATENT SPECIFICATION

(11) **EP 4 382 381 B1**
(45) Date of publication and mention of the grant of the patent: **04.11.2026**
(21) Application number: 21955355.9
(22) Date of filing: 30.08.2021
(51) Int. Cl.: B60K 28/10, B60K 28/12, B60W 50/10, B60W 50/14, B60T 7/04, B60T 7/12, B60T 7/22, B60T 13/74

(54) **VEHICLE CONTROL METHOD AND APPARATUS**
FAHRZEUGSTEUERUNGSVERFAHREN UND -VORRICHTUNG
PROCÉDÉ ET DISPOSITIF DE COMMANDE DE VÉHICULE

(43) Date of publication of application: 12.06.2024
(73) Proprietor: Yinwang Intelligent Technologies Co., Ltd., Shenzhen, Guangdong 518110 (CN)
(72) Inventor: ZHANG, Yu, Shenzhen, Guangdong 518129 (CN); ZHANG, Yongsheng, Shenzhen, Guangdong 518129 (CN); YANG, Weimiao, Shenzhen, Guangdong 518129 (CN); LV, Shangwei, Shenzhen, Guangdong 518129 (CN)
(74) Representative: Thun, Clemens
(86) International application number: PCT/CN2021/115428
(87) International publication number: WO 2023/028775

(56) References cited:
- EP-A1- 2 570 313
- EP-A1- 3 858 696
- CN-A- 108 248 581
- CN-A- 108 622 049
- CN-A- 110 877 606
- CN-A- 111 086 502
- CN-A- 111 169 441
- CN-A- 111 322 400
- CN-A- 111 422 173
- CN-A- 112 373 454
- CN-A- 113 799 708
- JP-A- 2011 235 709

## Description

### TECHNICAL FIELD

This invention relates to the field of vehicles, and specifically, to a vehicle control method and a vehicle control apparatus.

### BACKGROUND

With popularization of vehicles, more and more users choose to drive vehicles for travel, resulting in more and more vehicles on a road and frequent traffic jams. In a congested traffic environment, a vehicle may frequently start and stop, and a driver needs to continuously control an accelerator pedal and a brake pedal. This not only increases fatigue of the driver, but also sometimes causes a traffic accident due to an improper operation.

To avoid the foregoing case, an automatic vehicle hold technology emerges. The driver can enable an automatic vehicle hold function by stepping on the brake pedal, or the driver can enable an automatic vehicle hold function by operating an automatic vehicle hold start button, thereby reducing vehicle hold operations performed by the driver. However, a trigger manner of stepping on the brake pedal may trigger automatic vehicle hold by mistake or cannot successfully trigger automatic vehicle hold. In addition, arrangement of the automatic vehicle hold start button may increase difficulty in a layout design of a center console.

Therefore, how to accurately start an automatic vehicle hold system and reduce the difficulty in the layout design of the center console becomes an urgent problem to be resolved in the industry.
EP 3 858 696 relates to an automatic vehicle hold control method and device for a vehicle, wherein an automatic vehicle hold system enters an active state or a standby state based on a signal generated by the driver and on whether preset conditions are fulfilled. CN108622049 relates to an automatic parking device and method with a memory function. EP 2 570 313 relates to a regulating device for activation of a hill-hold function for a vehicle.

### SUMMARY

In view of the foregoing problem, embodiments of this invention provide a vehicle control method, a vehicle control apparatus, and a vehicle, to switch a status of an automatic vehicle hold system based on an instruction of a user, and cancel arrangement of a start button of an automatic vehicle hold function. This reduces difficulty in a layout design of a center console, ensures reliability of status switching of the automatic vehicle hold system, and avoids false triggering of the automatic vehicle hold function.

According to a first aspect of this invention, a vehicle control method comprising the features of claim 1 is provided, including: obtaining a first user instruction, where the first user instruction instructs to enable an automatic vehicle hold function; controlling, based on the first user instruction, an automatic vehicle hold system to switch to a wake-up state; obtaining status information of a vehicle; and switching a status of the automatic vehicle hold system based on the status information of the vehicle.

Through the foregoing setting, the status of the automatic vehicle hold system is woken up. After the automatic vehicle hold system is woken up, the status of the automatic vehicle hold system is switched based on the status information of the vehicle, to avoid false triggering of the automatic vehicle hold system and ensure reliability of an automatic vehicle hold operation.

According to the invention, the switching a status of the automatic vehicle hold system based on the status information of the vehicle includes: obtaining a user intention when the status information of the vehicle meets a first condition; and switching the status of the automatic vehicle hold system based on the user intention.

Through the foregoing setting, the user intention of using the automatic vehicle hold function is confirmed for second time, to further avoid incorrect switching of the status of the automatic vehicle hold system. This improves reliability of a function of the automatic vehicle hold system. According to the invention, the obtaining a user intention specifically includes: sending first prompt information, where the first prompt information is used to prompt a user to confirm performing an automatic vehicle hold operation; and obtaining from the user a second user instruction that is in response to the first prompt information. The switching the status of the automatic vehicle hold system based on the user intention specifically includes: when the second user instruction instructs to confirm performing the automatic vehicle hold operation, controlling the automatic vehicle hold system to switch to an activated state.

In a possible implementation, the second user instruction instructs to disable the automatic vehicle hold function, the automatic vehicle hold system is controlled to switch to a sleep state.

Through the foregoing setting, the user can disable the automatic vehicle hold function at any time based on a requirement of the user, thereby improving user experience. The automatic vehicle hold system that enters the sleep state can quickly enter the activated state when the user needs to perform automatic vehicle hold next time, to perform the automatic vehicle hold operation in time.

In a possible implementation, when the status information of the vehicle does not meet the first condition, the method further includes: sending second prompt information, where the second prompt information is used to notify the user of at least one piece of status information of the vehicle that does not meet the first condition.

Through the foregoing setting, the user is reminded of a condition that is not met when the automatic vehicle hold operation is performed. This improves user experience, and ensures the reliability of the automatic vehicle hold operation.

In a possible implementation, the first condition includes at least one of the following: A brake pedal stroke is greater than a first threshold, a brake pedal force is greater than a second threshold, brake system pressure is greater than a third threshold, a vehicle speed is 0, an accelerator pedal stroke is 0, or an accelerator pedal force is 0.

Through the foregoing setting, the automatic vehicle hold operation is enabled to meet a condition required by the automatic vehicle hold, thereby improving reliability of the automatic vehicle hold function.

In a possible implementation, the first condition further includes at least one of the following: The automatic vehicle hold system is fault-free, a vehicle door is in a closed state, or a seat belt of the user is fastened.

Whether the seat belt is worn or not may be identified based on audio and video information. For example, image information of the user may be obtained by using a camera, and the image information is recognized in a manner such as image recognition, to eliminate impact of a fake seat belt buckle.

Through the foregoing setting, the automatic vehicle hold operation is enabled to meet a security requirement, and user safety is improved.

In a possible implementation, when the status information of the vehicle meets a second condition, an electric parking brake is enabled. The second condition includes at least one of the following: The seat belt of the user is in an unlocked state, at least one vehicle door is in an open state, working time of the automatic vehicle hold system exceeds a fourth threshold, or the user leaves the vehicle.

In a possible implementation, the method further includes: controlling, based on a third user instruction or when the status information of the vehicle meets a third condition, the automatic vehicle hold system to switch to the sleep state.

The third user instruction instructs to disable the automatic vehicle hold function. The third condition includes at least one of the following: The accelerator pedal stroke is not 0, the accelerator pedal force is not 0, a gear is a park gear, or the electric parking brake is enabled.

Through the foregoing setting, the automatic vehicle hold system can switch the status based on a user instruction, thereby improving user experience. Switching the status based on the third condition can ensure driving safety.

The user instruction is at least one of the following: a voice instruction of the user, an operation instruction of the user on a touchscreen, or a gesture instruction of the user.

Through the foregoing setting, the automatic vehicle hold function is enabled or disabled using the method instead of using a physical switch, thereby reducing difficulty in a layout design of a center console.

According to a second aspect of this invention, a vehicle control apparatus comprising the features of claim 7 is provided.

Technical effect brought by the control apparatus provided in the second aspect and the possible implementations of the second aspect in embodiments of this invention is the same as technical effect brought by the control method provided in the first aspect and the possible implementations of the first aspect in embodiments of this invention. For brevity, details are not described herein again.

According to a third aspect of this invention, a computer-readable storage medium is provided. The computer-readable storage medium stores program instructions. When the program instructions are executed by a computer, the computer is enabled to perform the control method provided in the first aspect and the possible implementations of the first aspect in embodiments of this invention.

These aspects and another aspect of this invention are clearer and more comprehensible in descriptions of the following (a plurality of) embodiments.

### BRIEF DESCRIPTION OF DRAWINGS

The following further describes features of the present invention and relationships between the features with reference to accompanying drawings. The accompanying drawings are all examples, and some features are not shown in actual proportions. In addition, in some accompanying drawings, common features that are not mandatory for this invention in the field of this invention may be omitted. Alternatively, additional features that are not mandatory for this invention are not shown. A combination of the features shown in the accompanying drawings is not intended to limit this invention. In addition, in this specification, content referred to by same reference signs is also the same. The specific accompanying drawings are described as follows.
FIG. 1 is a schematic diagram of an application scenario of a vehicle control method according to an embodiment of this invention;
FIG. 2 is a flowchart of a vehicle control method according to an embodiment of this invention;
FIG. 3A and FIG. 3B are a flowchart of a specific implementation of a vehicle control method according to an embodiment of this invention;
FIG. 4 is a schematic diagram of modules of a vehicle control apparatus according to an embodiment of this invention; and
FIG. 5 is a schematic diagram of modules of a computing device according to an embodiment of this invention.

### DESCRIPTION OF EMBODIMENTS

In this specification and claims, the terms "first, second, third, and the like" or similar terms such as a module A, a module B, and a module C are merely used to distinguish between similar objects, and do not represent a specific order of the objects. It may be understood that specific orders or sequences may be exchanged if permitted, so that embodiments of this invention described herein can be implemented in an order other than an order illustrated or described herein.

In the following descriptions, involved reference numerals such as S110 and S120 that indicate steps do not necessarily indicate that the steps are to be performed based on the order, and consecutive steps may be transposed if allowed, or may be performed simultaneously.

The term "include" used in this specification and claims should not be construed as being limited to the content listed below, and does not exclude other elements or steps. It should be construed as specifying existence of a mentioned feature, entirety, step, or part, but does not preclude existence or addition of one or more other features, entireties, steps, or parts and their groups. Therefore, an expression "a device including an apparatus A and an apparatus B" should not be limited to a device including only the components A and B.

"One embodiment" or "an embodiment" mentioned in this specification means that a particular feature, structure, or characteristic described with reference to the embodiment is included in at least one embodiment of the present invention. Therefore, the terms "in one embodiment" or "in an embodiment" appearing in this specification do not necessarily indicate a same embodiment, but may indicate the same embodiment. Further, in one or more embodiments, the particular features, structures, or characteristics can be combined in any proper manner, as will be clear from this invention to a person of ordinary skill in the art.

Automatic vehicle hold (Automatic Vehicle Hold, AVH): When an automatic vehicle hold function is enabled, a sloping degree of a vehicle and a torque of a wheel are determined by using a sensor installed on the vehicle, and a vehicle parking force required for vehicle hold is further calculated. When a user steps on a throttle, a driving force for driving the vehicle to travel is calculated based on information provided by the sensor. When the driving force is greater than the vehicle parking force, the automatic vehicle hold function exits, so that the vehicle can start stably. After the automatic vehicle hold function is enabled, long-time braking is not required in a static state of the vehicle. The automatic vehicle hold function can prevent the vehicle from slipping on various roads in the static state of the vehicle, to keep the vehicle in a safe static state.

Electronic stability control system (Electronic Stability Control System, ESC) is also referred to as an electronic stability program (Electronic Stability Program, ESP), vehicle stability control (Vehicle Stability Control, VSC), vehicle stability assist (Vehicle Stability Assist, VSA), or dynamic stability control DSC (Dynamic Stability Control), or the like. The electronic stability control system is an anti-slip control system that can control a driving wheel and a driven wheel. The electronic stability control system generally includes: a control unit, a sensor (for example, a steering sensor that monitors a steering angle of a steering wheel, a wheel sensor that monitors a speed rotation of each wheel, a sideslip sensor that monitors a status of a vehicle body rotating around a vertical axis, a lateral acceleration sensor that monitors centrifugal force when the vehicle turns, an accelerator pedal sensor that monitors a pedaling degree of an accelerator pedal, or a brake pedal sensor that monitors a pedaling degree of the brake pedal sensor), and an actuator (for example, an anti-lock brake system). The control unit may determine, based on information obtained by the sensor, a deviation between a motion track of the vehicle and a preset track of the vehicle. If the deviation is excessively large, the control unit controls the anti-lock brake system to brake the wheel, to reduce the deviation between the motion track of the vehicle and the preset track of the vehicle.

Integrated brake system (Integrated Brake System, IBS): The integrated brake system may include a sensor, a power-assisted motor, a control unit, and a hydraulic unit. The control unit calculates, based on information obtained by the sensor, a brake power-assisted value, and sends an execution signal to the power-assisted motor. The power-assisted motor is connected to a push rod and a brake hydraulic pump by using a rack-and-pinion structure, and provides an additional torque for the brake hydraulic pump, to achieve effect of power assistance. This can implement a brake function such as an ABS/ESC/AVH of the vehicle.

Electric parking brake (Electric Parking Brake, EPB): The electric parking brake may include a control unit, a sensor, and an anti-lock brake system. The control unit may calculate, based on data obtained by a longitudinal acceleration sensor, a slope of a plane on which a vehicle is located, to calculate a sliding force generated by the vehicle on a slope due to gravity; and send an execution signal to a motor, to control the motor to apply a braking force to a rear wheel to balance the sliding force, so that the vehicle can stop on the slope. When the vehicle starts up on the slope, the control unit can calculate, based on data obtained by a displacement sensor on a clutch pedal and a throttle sensor on an accelerator pedal, a braking force required to keep the vehicle on the slope. In addition, the control unit obtains a traction force of an engine through communication between a high-speed vehicle bus and an electronic control unit, and reduces the braking force based on an increase of the traction force of an engine. When the traction force is enough to overcome the sliding force, the control unit controls the motor to release braking, thereby achieving smooth starting of the vehicle.

Unless otherwise defined, all technical and scientific terms used in this specification have same meanings as those usually understood by a person skilled in the art of this invention. In case of any inconsistency, the meaning described in this specification or the meaning obtained based on the content recorded in this specification shall be used.

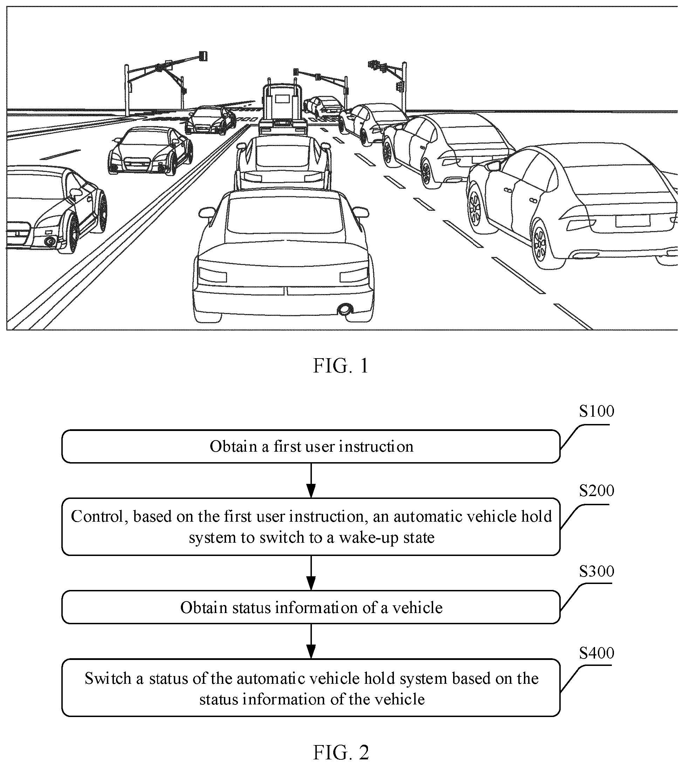

As shown in FIG. 1, a vehicle control method and a vehicle control apparatus provided in embodiments of this invention may be applied to a scenario in which a road is congested and a vehicle needs to frequently start and stop, and especially are more applicable to a congested road with a slope. In these scenarios, according to the vehicle control method provided in this embodiment of this invention, a driver does not need to frequently control an accelerator pedal and a brake pedal, thereby simplifying a driver operation.

The following describes, with reference to FIG. 2, the vehicle control method provided in this embodiment of this invention.

The vehicle control method in this embodiment of this invention may be performed by a terminal, for example, a terminal such as a vehicle, or may be performed by an electronic apparatus using an ESC, an IBS, an EPB, or the like in a vehicle, for example, an electronic control unit (Electronic Control Unit, ECU), a system chip, or a general-purpose chip. The ECU may obtain and process data collected by a microphone or a sensor (for example, a brake pedal stroke sensor or a brake pedal force sensor, a brake pressure sensor, a wheel speed sensor, or a position sensor on the accelerator pedal), and output a corresponding control signal to an anti-lock brake system, to control performing an automatic vehicle hold operation.

FIG. 2 is a flowchart of the vehicle control method according to this embodiment of this invention. As shown in FIG. 2, the vehicle control method provided in this embodiment of this invention includes the following steps.

Step S100: Obtain a first user instruction.

The first user instruction instructs to enable an automatic vehicle hold function. The automatic vehicle hold function is a function of performing the automatic vehicle hold operation by an automatic vehicle hold system when the driver does not need to perform a braking operation and enable electric parking brake. This can avoid unnecessary sliding of the vehicle, and ensure that the vehicle starts stably when the driver intends to actuate the vehicle to travel. The automatic vehicle hold system may include: a brake master cylinder, a brake wheel cylinder, a brake pipeline, an active pressure charging device, an actuator (a disc brake, or a drum brake), and the like, related to a brake system. The automatic vehicle hold system also includes a sensor (for example, an IMU acceleration sensor, which calculates a slope based on an acceleration, or a slope sensor), and may also include a controller (a domain controller, an ECU, an MCU, or the like). The controller may calculate, based on data provided by the sensor, a vehicle parking force required for performing the vehicle hold operation, and control the brake system to output a corresponding braking force. When a user steps on a throttle, a driving force for driving the vehicle to travel is calculated based on the data provided by the sensor. When the driving force is greater than the vehicle parking force, the automatic vehicle hold function exits, so that the vehicle can start stably.

In some embodiments, a user instruction may include at least one of the following: a voice instruction, an operation instruction of the user on a touchscreen, a gesture instruction of the user, or the like.

The first user instruction of the user may be stored. When the user repeatedly sends the first user instruction, prompt information is sent. The prompt information is used to prompt the user that the first user instruction of the user is sent. The prompt information may be, for example, one or more of the following: voice information, text information displayed on a central display screen, and picture information displayed on the central display screen.

Step S200: Control, based on the first user instruction, the automatic vehicle hold system to switch to a wake-up state.

When the first user instruction is not obtained, the automatic vehicle hold system may be in a sleep state. The controller of the automatic vehicle hold system is in a low power consumption state, and cannot perform related calculation and operation of the automatic vehicle hold. Only a wake-up circuit or a wake-up chip of the controller is in a running state.

Step S300: Obtain status information of the vehicle.

In some embodiments, the status information may include one or more of the following: brake pedal stroke information, brake pedal pressure information, brake system pressure information, vehicle speed information, accelerator pedal stroke information, accelerator pedal force information, or the like.

In some embodiments, the status information may further include one or more of the following: fault information or fault-free information of the automatic vehicle hold system, opening and closing information of a vehicle door, or seat belt wearing information.

Step S400: Switch a status of the automatic vehicle hold system based on the status information of the vehicle.

The status of the automatic vehicle hold system may include at least one of the following: the sleep state, the wake-up state, an enabled state, or an activated state.

In the sleep state, the controller of the automatic vehicle hold system is in the low power consumption state, and cannot perform the related calculation and operation of the automatic vehicle hold. Only the wake-up circuit or the wake-up chip of the controller is in the running state.

In the wake-up state, the controller of the automatic vehicle hold system is powered on under control of the wake-up circuit or the wake-up chip, but has not yet obtained status information that meets the first condition.

In the enabled state, the controller of the automatic vehicle hold system is in a power-on state, and has obtained status information that meets the first condition, but has not yet obtained a user's instruction confirming to perform the automatic vehicle hold operation.

In the activated state, the controller of the automatic vehicle hold system is in a power-on state, has obtained an instruction indicating confirmation for performing the automatic vehicle hold operation, and starts to perform the related calculation and operation of the automatic vehicle hold operation.

In the step S100, because the first user instruction of the user may be stored, when the user repeatedly sends the first user instruction, the sent prompt information may further prompt the user of a current status of the automatic vehicle hold system. For example, after the user repeatedly sends the first user instruction, but before the user obtains the instruction that instructs to confirm performing the automatic vehicle hold operation, the user is reminded that the automatic vehicle hold system is in the enabled state.

The step S400 includes: when the status information of the vehicle meets the first condition, obtaining a user intention; and switching the status of the automatic vehicle hold system based on the user intention.

In some embodiments, the first condition may include at least one of the following: A brake pedal stroke is greater than a first threshold, a brake pedal force is greater than a second threshold, brake system pressure is greater than a third threshold, a vehicle speed is 0, an accelerator pedal stroke is 0, or an accelerator pedal force is 0.

In some embodiments, the first condition further includes at least one of the following: The automatic vehicle hold system is fault-free, the vehicle door is in a closed state, or a seat belt of the user is fastened.

Whether the seat belt is worn or not may be identified based on audio and video information. For example, image information of the user may be obtained by using a camera, and the image information is recognized in a manner such as image recognition, to eliminate impact of a fake seat belt buckle.

In some embodiments, the user intention may include: switching the status of the automatic vehicle hold system to one of the following: the sleep state, the wake-up state, the enabled state, or the activated state. For example, the user may switch the status of the automatic vehicle hold system by sending the voice instruction, or may switch the status of the automatic vehicle hold system by using a gesture or operating the central display screen.

Obtaining the user intention includes: sending first prompt information, where the first prompt information is used to prompt the user to confirm performing the automatic vehicle hold operation; and obtaining from the user a second user instruction that is in response to the first prompt information. Switching the status of the automatic vehicle hold system based on the user intention specifically includes: when the second user instruction instructs to confirm performing the automatic vehicle hold operation, controlling the automatic vehicle hold system to switch to the activated state.

The first prompt information may include at least one of the following: a voice prompt (for example, "Please confirm whether to enable auto hold", "Do you want to enable auto hold?", or "Auto hold will be enabled, please confirm"), a sound prompt, a light prompt, a picture prompt displayed on the central display screen, a vibration prompt of the vehicle or a vehicle seat, and the like. This is not limited in this invention. The second user instruction may include a voice instruction (for example, "Okay", "OK", "Confirm", "Yes", "Please perform auto hold", "Please enable auto hold", and "Please start auto hold"), an operation instruction for the central display screen, a gesture instruction, or the like. This is not limited in this invention.

In some embodiments, when the second user instruction instructs to disable the automatic vehicle hold function, the automatic vehicle hold system is controlled to switch to the sleep state.

The second user instruction may include at least one of the following: the voice instruction, the operation instruction of the user on the touchscreen, the gesture instruction of the user, or the like.

In some embodiments, when the status information of the vehicle does not meet the first condition, the method further includes: sending second prompt information. The second prompt information is used to notify the user of at least one piece of status information of the vehicle that does not meet the first condition.

The second prompt information may be at least one of the following: voice information (for example, when a wheel speed is not 0, the second prompt information may be "The vehicle is not stopped, please stop the vehicle"; when the throttle is not released, the second prompt information may be "Please release the throttle"; and when the seat belt is not fastened, the second prompt information may be "Please fasten the seat belt".), and prompt information displayed on the central display screen (for example, a text or a picture is displayed on the central display screen for prompting).

In some embodiments, when the status information of the vehicle meets a second condition, the electric parking brake is enabled. The second condition includes at least one of the following: The seat belt of the user is in an unlocked state, at least one vehicle door is in an open state, working time of the automatic vehicle hold system exceeds a fourth threshold, or the user leaves the vehicle.

The electric parking brake may include a control unit, a sensor (for example, a longitudinal acceleration sensor, an accelerator pedal stroke sensor, or a clutch displacement sensor), and the anti-lock brake system (including a motor, a brake caliper, a brake box, and the like). The control unit may calculate, based on data obtained by the longitudinal acceleration sensor, a slope of a plane on which the vehicle is located, to calculate a sliding force generated by the vehicle on a slope due to gravity; and send an execution signal to the motor of the anti-lock brake system, to control the motor to apply the corresponding braking force to a rear wheel to balance the sliding force, so that the vehicle can stop on the slope. When the vehicle starts up on the slope, the control unit can calculate, based on data obtained by the displacement sensor on a clutch pedal and an accelerator pedal sensor, a braking force required to keep the vehicle on the slope. In addition, the control unit obtains a traction force of an engine through communication between a high-speed vehicle bus and an electronic control unit, and reduces the braking force based on an increase of the traction force of the engine. When the traction force is enough to overcome the sliding force, the control unit controls the motor to release braking, thereby achieving smooth starting of the vehicle.

When the automatic vehicle hold system works for more than a specific period of time, for example, 10 minutes, the electric parking brake takes over, and hydraulic braking is replaced with mechanical braking, to ensure long-time safe parking.

In some embodiments, the method further includes: controlling, based on a third user instruction or when the status information of the vehicle meets a third condition, the automatic vehicle hold system to switch to the sleep state. The third user instruction instructs to disable the automatic vehicle hold function. The third condition includes at least one of the following: The accelerator pedal stroke is not 0, the accelerator pedal force is not 0, a gear is a park gear, or the electric parking brake is enabled.

In some embodiments, when the automatic vehicle hold system is powered off and then powered on again, third prompt information may be further sent to the user based on a status of the automatic vehicle hold system that is stored when the automatic vehicle hold system is powered off, to prompt the user to send the first user instruction to wake up the automatic vehicle hold system. For example, when the vehicle performs the automatic vehicle hold operation, and when the vehicle is powered off unexpectedly, and is started again, the third prompt information may be sent to the user, to prompt the user to wake up the automatic vehicle hold system.

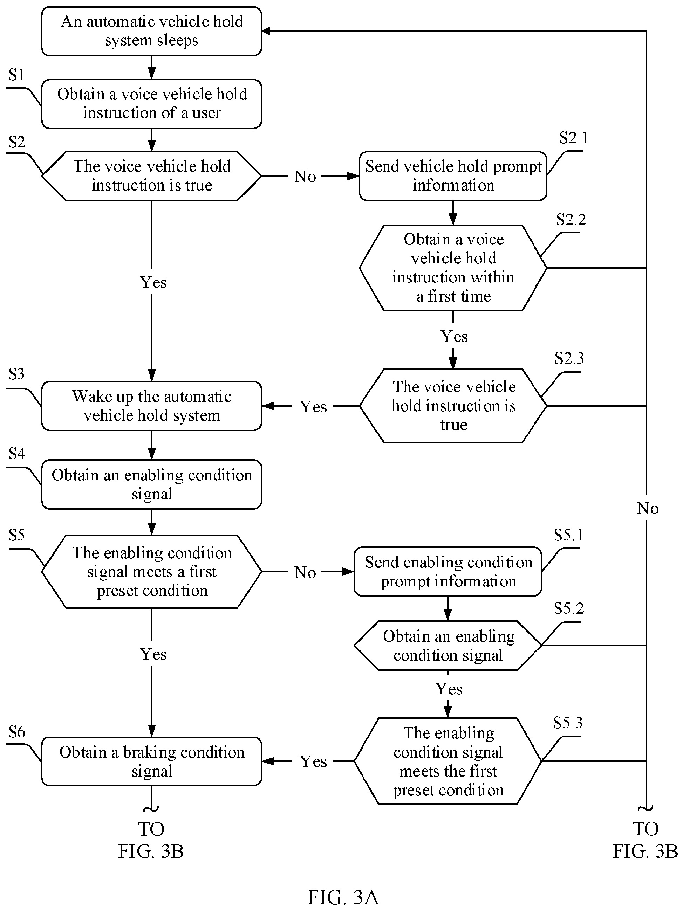

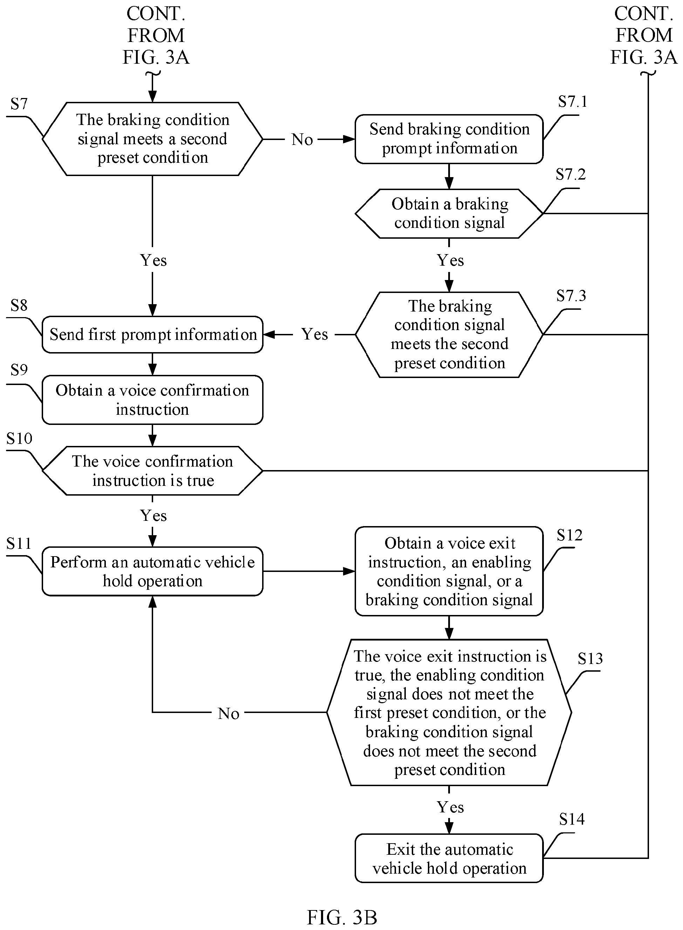

FIG. 3A and FIG. 3B are a flowchart of a specific implementation of a vehicle control method according to an embodiment of this invention. As shown in FIG. 3A and FIG. 3B, the vehicle control method provided in this embodiment of this invention may include the following steps.

Step S1: Obtain a voice vehicle hold instruction of a user.

The voice vehicle hold instruction of the user may be captured by using an in-vehicle microphone or a microphone array. The microphone is configured to convert a sound signal into an electrical signal, for example, convert the voice vehicle hold instruction into the electrical signal. When sending voice information, the user may make a sound through the mouth, to input the sound signal to the microphone. The sound signal is captured, and noise reduction may also be implemented. For example, the voice vehicle hold instruction may be: Please enable an automatic vehicle hold function, please perform automatic vehicle hold, enable automatic vehicle hold, start automatic vehicle hold, or the like.

Step S2: Determine whether the voice vehicle hold instruction of the user is true.

In some embodiments, whether the voice vehicle hold instruction of the user is true may be determined in a manner of voice recognition or by using a natural language processing model. The natural language processing model may be a deep learning-based natural language processing model. The natural language processing model is not specifically limited in this embodiment.

When the voice vehicle hold instruction is true, step S3 is performed: Wake up an automatic vehicle hold system.

When an automatic vehicle hold operation is not performed, the automatic vehicle hold system may be in a sleep state. When the automatic vehicle hold system is in the sleep state, only a processing circuit or chip (for example, an SBC chip or a SOC chip) with low power consumption of an automatic vehicle hold control circuit board is in a working state, and another functional chip (for example, an MCU) is powered off and stops running. When the voice vehicle hold instruction is true, the automatic vehicle hold system is woken up, and a power supply chip of the automatic vehicle hold control circuit board starts to supply power to another functional chip inside the system. In this case, the automatic vehicle hold system is in a wake-up state.

When the voice vehicle hold instruction is false, steps S2.1 to S2.3 are performed.

Step S2.1: Send vehicle hold instruction prompt information.

The vehicle hold instruction prompt information is used to prompt the user that the voice vehicle hold instruction is true. For example, the prompt information may be "Have a try, please enable an auto hold function" or "Have a try, please perform auto hold".

Step S2.2: Obtain a voice vehicle hold instruction again within first time.

When the voice vehicle hold instruction is obtained within the first time, step S2.3 is performed: Determine whether the voice vehicle hold instruction is true. When the voice instruction is not obtained within the first time, the automatic vehicle hold system remains in the sleep state.

In the step S2.3, a method for determining whether the voice vehicle hold instruction is true is the same as that in the step S2. Details are not described herein again.

When the voice instruction is true, the step S3 is performed: Wake up the automatic vehicle hold system.

When the voice instruction is false, the automatic vehicle hold system remains in the sleep state.

Step S4: Obtain an enabling condition signal.

The enabling condition signal is used to determine a security condition required for performing the automatic vehicle hold operation. In some embodiments, the enabling condition signal may include a vehicle door opening/closing signal, a seat belt wearing signal, and an automatic vehicle hold system status signal.

Step S5: Determine whether the enabling condition signal meets a first preset condition.

The first preset condition may include: A vehicle door is in a closed state, a seat belt is fastened, and the automatic vehicle hold system is fault-free.

When an enabling condition does not meet the first preset condition, step S5.1 to step S5.3 are performed.

Step S5.1: Send enabling condition prompt information.

The enabling condition prompt information is used to prompt the user that the first preset condition is not met. For example, when the vehicle door is not closed, the enabling condition prompt information may be "Please close the vehicle door" or "The vehicle door is not closed". When the seat belt is not fastened, the enabling condition prompt information may be "The seat belt is not fastened" or "Please fasten the seat belt".

Step S5.2: Obtain an enabling condition signal again.

The enabling condition signal that does not meet the first preset condition may be obtained again. For example, when the vehicle door is not closed, only a door signal may be obtained. Alternatively, all enabling condition signals may be obtained.

Step S5.3: Determine whether the enabling condition signal meets the first preset condition.

When the enabling condition signal does not meet the first preset condition, the automatic vehicle hold system is controlled to enter the sleep state.

When the enabling condition signal meets the first preset condition, step S6 is performed: Obtain a braking condition signal.

The braking condition signal may include a brake pedal signal, a brake system pressure signal, a vehicle speed signal, and an accelerator pedal signal.

In some embodiments, the brake pedal signal may be obtained by using a brake pedal stroke sensor, a brake pedal force sensor, or the like. A brake pressure signal may be obtained by using a brake pressure sensor. The vehicle speed signal may be obtained by using a wheel speed sensor. The accelerator pedal signal may be obtained by using a position sensor on an accelerator pedal.

Step S7: Determine whether the braking condition signal meets a second preset condition.

The second preset condition may include: at least one of the following: A brake pedal stroke is greater than a first threshold, a brake pedal force is greater than a second threshold, brake system pressure is greater than a third threshold, a vehicle speed is 0, an accelerator pedal stroke is 0, or an accelerator pedal force is 0.

When it is determined that the braking condition signal does not meet the second preset condition, steps S7.1 to S7.3 are performed.

Step S7.1: Send braking condition prompt information.

The braking condition prompt information is used to prompt the user that the second preset condition is not met. For example, the braking condition prompt information may be: "The brake pedal is not stepped on", "Hydraulic braking pressure is insufficient", "Please stop the vehicle", or "Please release the throttle".

Step S7.2: Obtain a braking condition signal again.

The braking condition signal that does not meet the second preset condition may be obtained. For example, when the brake pedal is not stepped on, only the brake pedal signal may be obtained. Alternatively, all braking condition signals may be obtained.

Step S7.3: Determine whether the braking condition signal meets the second preset condition.

When the braking condition signal does not meet the second preset condition, the automatic vehicle hold system is controlled to enter the sleep state.

It should be noted that the braking condition signal and the enabling condition signal are also referred to as status information of the vehicle in this invention. The first preset condition and the second preset condition are also respectively referred to as a first condition and a second condition in this invention.

When the braking condition signal meets the second preset condition, step S8 is performed: Send first prompt information, where the first prompt information is used to prompt the user to confirm performing the automatic vehicle hold operation.

The first prompt information may include: "Please confirm auto hold", "Do you want to perform the automatic vehicle hold operation?", "Auto hold is ready, please confirm", or the like.

Step S9: Obtain a voice confirmation instruction.

The voice confirmation instruction may include: "Okay", "OK", "Confirm", "Please go", "Please enable", "Please turn on", "Okay, auto hold", "OK, auto hold", "Confirm, auto hold", or the like.

Step S10: Determine whether the voice confirmation instruction of the user is true.

In some embodiments, a method for determining whether the voice confirmation instruction is true is the same as that in the step S2. Details are not described herein again.

The voice confirmation instruction may be, for example, "Okay", "OK", "Confirm", "Please go", "Please enable", or "Please turn on".

When the voice confirmation instruction of the user is true, step S11 is performed: Perform the automatic vehicle hold operation.

When the voice confirmation instruction of the user is false, the automatic vehicle hold system is controlled to enter the sleep state.

In some embodiments, when the automatic vehicle hold operation is performed, the method further includes step S12: Obtain a voice exit instruction, obtain an enabling condition signal, or obtain a braking condition signal.

Step S13: Determine whether the voice exit instruction is true, whether the enabling condition signal meets the first preset condition, or whether the braking condition signal meets the second preset condition.

When the voice exit instruction is true, the enabling condition signal does not meet the first preset condition, or the braking condition signal does not meet the second preset condition, step S14 is performed: Control the automatic vehicle hold system to exit the automatic vehicle hold operation and to enter the sleep state.

For example, when the user sends "Please exit the automatic vehicle hold operation", the automatic vehicle hold system is controlled to enter the sleep state. For another example, when the enabling condition signal does not meet the first preset condition or the braking condition signal does not meet the second preset condition, to be specific, when at least one of the following signals: a door opening signal, a seat belt unlocking signal, a signal indicating feeding insufficiency of the automatic vehicle hold system (for example, a voltage of the automatic vehicle hold system is lower than a preset voltage), the brake pedal stroke being less than a first stroke, the hydraulic braking pressure being less than first pressure, the vehicle speed being greater than 0, or the accelerator pedal stroke being greater than 0 is obtained, the automatic vehicle hold system is controlled to enter the sleep state.

In some embodiments, when the automatic vehicle hold operation is performed, and when the voice exit instruction is true, the enabling condition signal does not meet the first preset condition, or the braking condition signal does not meet the second preset condition, the automatic vehicle hold system may alternatively be controlled to exit the automatic vehicle hold operation but remain in the wake-up state, so as to send vehicle hold prompt information to the user next time when the enabling condition signal meets the first preset condition and the braking condition signal meets the second preset condition, to prompt the user whether to enable the automatic vehicle hold function. After the user confirms that, the automatic vehicle hold operation is performed again.

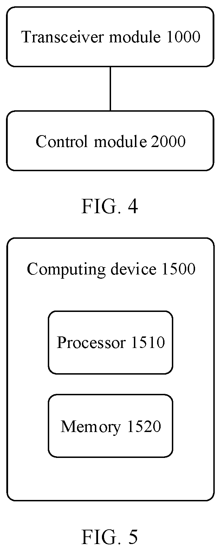

FIG. 4 is a schematic diagram of modules of a control apparatus for an automatic vehicle hold system according to an embodiment of this invention. The control apparatus includes a transceiver unit 1000 and a control unit 2000.

The transceiver unit 1000 is configured to obtain a first user instruction, where the first user instruction instructs to enable an automatic vehicle hold function. The control unit 2000 is configured to control, based on the first user instruction, the automatic vehicle hold system to switch to a wake-up state. The transceiver unit 1000 is further configured to obtain status information of a vehicle. The control unit 2000 is further configured to switch a status of the automatic vehicle hold system based on the status information of the vehicle.

In some embodiments, the control unit 2000 is specifically configured to: when the status information of the vehicle meets a first condition, obtain a user intention; and switch the status of the automatic vehicle hold system based on the user intention.

In some embodiments, the control unit 2000 is specifically configured to: send first prompt information, where the first prompt information is used to prompt a user to confirm performing an automatic vehicle hold operation; and obtain from the user a second user instruction that is in response to the first prompt information. The control unit 2000 is specifically configured to: when the second user instruction instructs to confirm performing the automatic vehicle hold operation, control the automatic vehicle hold system to switch to an activated state.

In some embodiments, the control unit 2000 is further configured to: when the second user instruction instructs to disable the automatic vehicle hold function, control the automatic vehicle hold system to switch to a sleep state.

In some embodiments, the transceiver unit 1000 is further configured to: when the status information of the vehicle does not meet the first condition, send second prompt information. The second prompt information is used to notify the user of at least one piece of status information of the vehicle that does not meet the first condition.

In some embodiments, the first condition includes at least one of the following: A brake pedal stroke is greater than a first threshold, a brake pedal force is greater than a second threshold, brake system pressure is greater than a third threshold, a vehicle speed is 0, an accelerator pedal stroke is 0, or an accelerator pedal force is 0.

In some embodiments, the first condition further includes at least one of the following: The automatic vehicle hold system is fault-free, a vehicle door is in a closed state, or a seat belt of the user is fastened.

In some embodiments, the control unit 2000 is further configured to: when the status information of the vehicle meets a second condition, enable an electric parking brake. The second condition includes at least one of the following: The seat belt of the user is in an unlocked state, at least one vehicle door is in an open state, working time of the automatic vehicle hold system exceeds a fourth threshold, or the user leaves the vehicle.

In some embodiments, the control unit 2000 is further configured to control, based on a third user instruction or when the status information of the vehicle meets a third condition, the automatic vehicle hold system to switch to the sleep state. The third user instruction instructs to disable the automatic vehicle hold function. The third condition includes at least one of the following: The accelerator pedal stroke is not 0, the accelerator pedal force is not 0, a gear is a park gear, or the electric parking brake is enabled.

In some embodiments, a user instruction is at least one of the following: a voice instruction of the user, an operation instruction of the user on a touchscreen, or a gesture instruction of the user.

The foregoing modules, namely, the transceiver unit 1000 and the control unit 2000, are configured to perform related steps of the foregoing method. For example, the transceiver unit 1000 is configured to perform related content of the step S100, the step S300, the step S1, the step S2.1, and the like. The control unit 2000 is configured to perform related content of the step S200, the step S400, and the like.

In this embodiment, the control apparatus for the automatic vehicle hold system is presented in a form of a unit. The "unit" herein may be an application-specific integrated circuit (application-specific integrated circuit, ASIC), a processor and a memory that execute one or more software or firmware programs, an integrated logic circuit, and/or another device that can provide the foregoing functions. In addition, the transceiver unit 1000 and the control unit 2000 may be implemented by using a processor 1510 of a computing device shown in FIG. 5.

FIG. 5 is a schematic diagram of a structure of a computing device 1500 according to an embodiment of this invention. The computing device 1500 includes the processor 1510 and a memory 1520.

The processor 1510 may be connected to the memory 1520. The memory 1520 may be configured to store program code and data. Therefore, the memory 1520 may be a storage unit in the processor 1510, an external storage unit independent of the processor 1510, or a component including the storage unit in the processor 1510 and the external storage unit independent of the processor 1510.

Optionally, the computing device 1500 may further include a bus. The memory 1520 and a communication interface may be connected to the processor 1510 through the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. It should be understood that, in this embodiment of this invention, the processor 1510 may use a central processing unit (central processing unit, CPU). The processor may be alternatively a general-purpose processor, a digital signal processor (digital signal processor, DSP), an application-specific integrated circuit (application-specific integrated circuit, ASIC), a field programmable gate array (field programmable gate Array, FPGA) or another programmable logic device, a discrete gate or a transistor logic device, or a discrete hardware component. The general-purpose processor may be a microprocessor, or the processor may be any conventional processor or the like. Alternatively, the processor 1510 uses one or more integrated circuits to execute a related program, to implement technical solutions provided in embodiments of this invention.

The memory 1520 may include a read-only memory and a random access memory, and provide instructions and data for the processor 1510. A part of the processor 1510 may further include a non-volatile random access memory. For example, the processor 1510 may further store information about a device type.

When the computing device 1500 runs, the processor 1510 executes computer-executable instructions in the memory 1520 to perform the operation steps of the foregoing method.

It should be understood that, the computing device 1500 according to this embodiment of this invention may correspond to a corresponding body that performs the method in embodiments of this invention. In addition, the foregoing and other operations and/or functions of modules in the computing device 1500 are respectively intended to implement corresponding procedures of methods in embodiments. For brevity, details are not described herein again.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this invention.

It may be clearly understood by a person skilled in the art that, for ease and brevity of description, for a detailed working process of the foregoing system, apparatus, and unit, refer to a corresponding process in the foregoing method embodiments, and details are not described again herein.

In the several embodiments provided in this invention, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this invention essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this invention. The foregoing storage medium includes any medium that can store the program code, such as a USB flash drive, a removable hard disk, a read-only memory (Read-Only Memory, ROM), a random access memory (Random Access Memory, RAM), a magnetic disk, or an optical disc.

An embodiment of this invention further provides a computer-readable storage medium. The computer-readable storage medium stores a computer program. When the program is executed by a processor, the program is used to perform a vehicle control method. The method includes at least one of the solutions described in the foregoing embodiments.

The computer storage medium in this embodiment of this invention may be any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof. In this specification, the computer-readable storage medium may be any tangible medium that includes or stores a program, and the program can be used by an instruction execution system, apparatus or device, or used in combination with the instruction execution system, apparatus or device.

The computer-readable signal medium may include a data signal that is propagated in a baseband or as part of a carrier wave, where the data signal carries computer-readable program code. Such a propagated signal may be in a variety of forms, including but not limited to, an electromagnetic signal, an optical signal, or any suitable combination thereof. The computer-readable signal medium may alternatively be any computer-readable medium except for the computer-readable storage medium, and the computer-readable medium may send, propagate, or transmit a program used by or in combination with an instruction execution system, apparatus, or device.

The program code included in the computer-readable medium may be transmitted by using any suitable medium, including but not limited to a wireless medium, an electrical wire, an optical cable, an RF medium, or any appropriate combination thereof.

The computer program code for performing operations in this invention may be written in one or more programming languages or a combination thereof. The programming languages include object-oriented programming languages such as Java, Smalltalk, C++, and further include conventional procedural programming languages such as "C" language or similar programming languages. The program code may be executed entirely on a user computer, partially on a user computer, as an independent software package, partially on a user computer and partially on a remote computer, or entirely on a remote computer or server. When a remote computer is involved, the remote computer may be connected to a user computer through any type of network, including a local area network (LAN) or a wide area network (WAN), or may be connected to an external computer (for example, connected by using an Internet service provider through the Internet).

It should be noted that the foregoing descriptions are merely exemplary embodiments and applied technical principles of this invention. A person skilled in the art understands that the present invention is not limited to the specific embodiments described herein, and a person skilled in the art can make various obvious changes, readjustments, and replacements without departing from the protection scope of the present invention. The scope of protection is defined by the appended claims.

## Claims

1. A vehicle control method performed by a vehicle control apparatus, the method comprising:
• obtaining (S100, S1) a first user instruction, wherein the first user instruction instructs to enable an automatic vehicle hold function;
• controlling (S200, S3), based on the first user instruction, an automatic vehicle hold system to switch to a wake-up state;
• in the wake-up state, obtaining (S300, S4, S5.2, S6, S7.2, S12) status information of a vehicle; and
• switching (S400, S11, S14) a status of the automatic vehicle hold system based on the obtained status information of the vehicle,
wherein the switching (S400, S11, S14) the status of the automatic vehicle hold system based on the obtained status information of the vehicle comprises:
∘ when the obtained status information of the vehicle meets a first condition, obtaining a user intention, wherein the obtaining the user intention specifically comprises:
▪ sending (S8) first prompt information, wherein the first prompt information is used to prompt a user to confirm performing an automatic vehicle hold operation; and
▪ in response to the sending of the first prompt information, obtaining (S9) from the user a second user instruction; and
∘ switching the status of the automatic vehicle hold system based on the user intention, and wherein in the wake-up state a controller of the automatic vehicle hold system is powered on under control of a wake-up circuit or a wake-up chip, but has not yet obtained the status information that meets the first condition,
wherein the switching the status of the automatic vehicle hold system based on the user intention specifically comprises: when the second user instruction instructs to confirm performing the automatic vehicle hold operation, controlling the automatic vehicle hold system to switch (S11) to an activated state.

2. The method according to claim 1, wherein, when the second user instruction instructs to disable the automatic vehicle hold function, the automatic vehicle hold system is controlled to switch to a sleep state.

3. The method according to any one of claims 1 to 2, wherein, when the status information of the vehicle does not meet the first condition, the method further comprises:
o sending second prompt information, wherein the second prompt information is used to notify the user of at least one piece of status information of the vehicle that does not meet the first condition.

4. The method according to any one of claims 1 to 3, wherein the first condition comprises at least one of the following: a brake pedal stroke is greater than a first threshold, a brake pedal force is greater than a second threshold, brake system pressure is greater than a third threshold, a vehicle speed is 0, an accelerator pedal stroke is 0, or an accelerator pedal force is o.

5. The method according to any one of claims 1 to 4, wherein the first condition further comprises at least one of the following: the automatic vehicle hold system is fault-free, a vehicle door is in a closed state, or a seat belt of the user is fastened.

6. The method according to any one of claims 1 to 5, wherein the user instruction is at least one of the following: a voice instruction of the user, an operation instruction of the user on a touchscreen, or a gesture instruction of the user.

7. A vehicle control apparatus configured to perform the method according to any of claims 1 to 6.

8. A computer-readable storage medium, wherein the computer-readable storage medium stores program instructions, and when the program instructions are executed by a computer, the computer is caused to perform the vehicle control method according to any one of claims 1 to 6.

## Patentansprüche

1. Fahrzeugsteuerungsverfahren, das von einer Fahrzeugsteuerungsvorrichtung durchgeführt wird, wobei das Verfahren umfasst:
• Erhalten (S100, S1) einer ersten Benutzeranweisung, wobei die erste Benutzeranweisung anweist, eine automatische Fahrzeughaltefunktion zu aktivieren;
• Steuern (S200, S3), basierend auf der ersten Benutzeranweisung, eines automatischen Fahrzeughaltesystems derart, dass es in einen Weckzustand umschaltet;
• im Weckzustand Erhalten (S300, S4, S5.2, S6, S7.2, S12) von Statusinformationen eines Fahrzeugs; und
• Schalten (S400, S11, S14) eines Status des automatischen Fahrzeughaltesystems basierend auf den erhaltenen Statusinformationen des Fahrzeugs,
wobei das Schalten (S400, S11, S14) des Status des automatischen Fahrzeughaltesystems
basierend auf den erhaltenen Statusinformationen des Fahrzeugs Folgendes umfasst:
∘ wenn die erhaltenen Statusinformationen des Fahrzeugs eine erste Bedingung erfüllen, Erhalten einer Benutzerabsicht, wobei das Erhalten der Benutzerabsicht spezifisch Folgendes umfasst:
▪ Senden (S8) erster Aufforderungsinformationen, wobei die ersten Aufforderungsinformationen verwendet werden, um einen Benutzer aufzufordern, das Durchführen eines automatischen Fahrzeughaltevorgangs zu bestätigen; und
▪ als Reaktion auf das Senden der ersten Aufforderungsinformationen Erhalten (S9) einer zweiten Benutzeranweisung von dem Benutzer; und
∘ Schalten des Status des automatischen Fahrzeughaltesystems basierend auf der Benutzerabsicht, und wobei im Weckzustand eine Steuervorrichtung des automatischen Fahrzeughaltesystems unter Steuerung einer Weckschaltung oder eines Weckchips eingeschaltet wird, aber die Statusinformationen, die die erste Bedingung erfüllen, noch nicht erhalten hat,
wobei das Schalten des Status des automatischen Fahrzeughaltesystems basierend auf der Benutzerabsicht spezifisch Folgendes umfasst: wenn die zweite Benutzeranweisung anweist, das Durchführen des automatischen Fahrzeughaltevorgangs zu bestätigen, Steuern des automatischen Fahrzeughaltesystems derart, dass es in einen aktivierten Zustand umschaltet (S11).

2. Verfahren nach Anspruch 1, wobei, wenn die zweite Benutzeranweisung anweist, die automatische Fahrzeughaltefunktion zu deaktivieren, das automatische Fahrzeughaltesystem so gesteuert wird, dass es in einen Schlafzustand umschaltet.

3. Verfahren nach einem der Ansprüche 1 bis 2, wobei, wenn die Statusinformationen des Fahrzeugs die erste Bedingung nicht erfüllen, das Verfahren ferner Folgendes umfasst:
∘ Senden zweiter Aufforderungsinformationen, wobei die zweiten Aufforderungsinformationen verwendet werden, um den Benutzer über mindestens eine Statusinformation des Fahrzeugs zu benachrichtigen, die die erste Bedingung nicht erfüllt.

4. Verfahren nach einem der Ansprüche 1 bis 3, wobei die erste Bedingung mindestens eines der Folgenden umfasst: ein Bremspedalhub ist größer als ein erster Schwellenwert, eine Bremspedalkraft ist größer als ein zweiter Schwellenwert, ein Bremssystemdruck ist größer als ein dritter Schwellenwert, eine Fahrzeuggeschwindigkeit ist 0, ein Gaspedalhub ist 0 oder eine Gaspedalkraft ist 0.

5. Verfahren nach einem der Ansprüche 1 bis 4, wobei die erste Bedingung ferner mindestens eines der Folgenden umfasst: das automatische Fahrzeughaltesystem ist fehlerfrei, eine Fahrzeugtür befindet sich in einem geschlossenen Zustand oder ein Sicherheitsgurt des Benutzers ist angelegt.

6. Verfahren nach einem der Ansprüche 1 bis 5, wobei die Benutzeranweisung mindestens eines der Folgenden ist: eine Sprachanweisung des Benutzers, eine Bedienungsanweisung des Benutzers auf einem Touchscreen oder eine Gestenanweisung des Benutzers.

7. Fahrzeugsteuerungsvorrichtung, die dazu ausgelegt ist, das Verfahren nach einem der Ansprüche 1 bis 6 durchzuführen.

8. Computerlesbares Speichermedium, wobei das computerlesbare Speichermedium Programmanweisungen speichert und, wenn die Programmanweisungen durch einen Computer ausgeführt werden, der Computer veranlasst wird, das Fahrzeugsteuerungsverfahren nach einem der Ansprüche 1 bis 6 durchzuführen.

## Revendications

1. Procédé de commande de véhicule réalisé par un appareil de commande de véhicule, le procédé comprenant :
• l'obtention (S100, S1) d'une première instruction d'utilisateur, la première instruction d'utilisateur ordonnant de permettre une fonction de maintien de véhicule automatique;
• la commande (S200, S3), sur la base de la première instruction d'utilisateur, d'un système de maintien de véhicule automatique de changer à un état de réveil ;
• dans l'état de réveil, l'obtention (S300, S4, S5.2, S6, S7.2, S12) d'informations d'état d'un véhicule ; et
• le changement (S400, S11, S14) d'un état du système de maintien de véhicule automatique sur la base des informations d'état obtenues du véhicule,
dans lequel le changement (S400, S11, S14) de l'état du système de maintien de véhicule automatique sur la base des informations d'état obtenues du véhicule comprend :
∘ lorsque les informations d'état obtenues du véhicule répondent à une première condition, l'obtention d'une intention d'utilisateur, dans lequel l'obtention de l'intention d'utilisateur comprend spécifiquement :
▪ l'envoi (S8) d'une première information d'invite, la première information d'invite étant utilisée pour inviter un utilisateur à confirmer la réalisation d'une opération de maintien de véhicule automatique ; et
▪ en réponse à l'envoi de la première information d'invite, l'obtention (S9) en provenance de l'utilisateur d'une deuxième instruction d'utilisateur ; et
∘ le changement de l'état du système de maintien de véhicule automatique sur la base de l'intention d'utilisateur, et dans l'état de réveil un contrôleur du système de maintien de véhicule automatique étant sous le contrôle d'un circuit de réveil ou d'une puce de réveil, mais n'ayant pas encore obtenu l'information d'état qui répond à la première condition,
dans lequel le changement de l'état du système de maintien de véhicule automatique sur la base de l'intention de l'utilisateur comprend spécifiquement : lorsque la deuxième instruction d'utilisateur ordonne de confirmer l'exécution de l'opération de maintien de véhicule automatique, la commande du système de maintien de véhicule automatique pour changer (S11) à un état activé.

2. Procédé selon la revendication 1, dans lequel, lorsque la deuxième instruction d'utilisateur ordonne de désactiver la fonction de maintien de véhicule automatique, le système de maintien de véhicule automatique est commandé pour changer à un état de veille.

3. Procédé selon l'une quelconque des revendications 1 et 2, dans lequel, lorsque les informations d'état du véhicule ne répondent pas à la première condition, le procédé comprend en outre :
∘ l'envoi de deuxièmes informations d'invite, les deuxièmes informations d'invite étant utilisées pour notifier l'utilisateur d'au moins un élément d'informations d'état du véhicule qui ne répond pas à la première condition.

4. Procédé selon l'une quelconque des revendications 1 à 3, dans lequel la première condition comprend au moins l'une des suivantes : une course de pédale de frein est supérieure à un premier seuil, une force de pédale de frein est supérieure à un deuxième seuil, la pression de système de freinage est supérieure à un troisième seuil, une vitesse du véhicule est o, une course de pédale d'accélérateur est o, ou une force de pédale d'accélérateur est o.

5. Procédé selon l'une quelconque des revendications 1 à 4, dans lequel la première condition comprend en outre au moins l'un des éléments suivants : le système de maintien de véhicule automatique est exempt de défauts, une porte de véhicule est dans un état fermé, ou une ceinture de sécurité de l'utilisateur est attachée.

6. Procédé selon l'une quelconque des revendications 1 à 5, dans lequel l'instruction d'utilisateur est au moins l'une des suivantes : une instruction vocale de l'utilisateur, une instruction d'opération de l'utilisateur sur un écran tactile, ou une instruction de geste de l'utilisateur.

7. Appareil de commande de véhicule, configuré pour réaliser le procédé selon l'une quelconque des revendications 1 à 6.

8. Support de stockage lisible par ordinateur, dans lequel le support de stockage lisible par ordinateur stocke des instructions de programme, et lorsque les instructions de programme sont exécutées par un ordinateur, l'ordinateur est amené à réaliser le procédé de commande de véhicule selon l'une quelconque des revendications 1 à 6.
